# FASCICULE DE BREVET EUROPEEN

(11) **EP 0 990 807 B1**
(45) Date de publication et mention de la délivrance du brevet: **14.05.2003**
(21) Numéro de dépôt: 99402390.1
(22) Date de dépôt: 30.09.1999
(51) Int. Cl.: F16B 21/16, F23N 1/08

(54) **Liaison amovible par emmanchement d'un corps sur un organe de réception.**
Lösbare Befestigung zum Aufstecken eines Körpers auf ein Aufnahmeelement
Releasable connection for fitting a body on a receiving organ

(30) Priorité: 02.10.1998 FR 9812372
(43) Date de publication de la demande: 05.04.2000
(73) Titulaire: CHAFFOTEAUX ET MAURY, 78400 Chatou (FR)
(72) Inventeur: Porcher, Jean-Michel Georges Marie, 22000 Saint-Brieuc (FR); Hervo, Jean-Francois Roger Noel, 22950 Tregueux (FR)
(74) Mandataire: Bérogin, Francis

(56) Documents cités:
- DE-A- 3 539 020
- US-A- 4 009 896
- US-A- 4 733 987
- US-A- 5 518 332

## Description

La présente invention est relative à une liaison amovible par emmanchement d'un corps sur un organe de réception, le corps et l'organe de réception comprenant chacun au moins deux faces situées sensiblement en vis-à-vis et étant d'axes longitudinaux sensiblement confondus après emmanchement.

L'invention s'applique en particulier pour lier de manière démontable le corps d'une valve gaz au couvercle d'une valve eau d'un générateur d'eau chaude fonctionnant au gaz. Dans ce type d'appareil, les opérations d'entretien nécessitent le démontage de la liaison des deux valves.

On connaît, notamment d'après le US-A-4 009 896, des liaisons amovibles dans lesquelles :
- les deux faces du corps sont chacune traversées par une rainure transversale à l'axe longitudinal ;
- les deux faces de l'organe de réception, destinées à être en regard desdites deux faces du corps après emmanchement, sont chacune munies d'une gorge transversale à l'axe longitudinal ;
- un fil en matériau à déformation élastique est porté par le corps, transversalement à l'axe longitudinal, le fil possédant au moins deux branches, chacune des branches étant logée dans l'une des rainures du corps et est terminée par une extrémité libre ; et
- les branches sont destinées à pénétrer dans les gorges de l'organe de réception après emmanchement pour maintenir en position le corps sur l'organe de réception, et les extrémités libres des branches sont destinées à être manoeuvrées par un opérateur pour désengager les branches des gorges et désolidariser le corps de l'organe de réception.

Toutefois, la structure d'une telle liaison amovible ne permet pas à un opérateur de provoquer facilement un écartement des branches suffisant pour désolidariser le corps de l'organe de réception, en particulier lorsque l'ensemble est rendu difficile d'accès. De plus, la mise en place du fil à déformation élastique est peu aisée.

L'invention a pour but de remédier aux inconvénients précités en fournissant une liaison démontable qui soit facilement et rapidement désolidarisée sans nécessiter d'outils extérieurs et ce, en assurant un bon positionnement et une bonne immobilisation non permanente du corps par rapport à l'organe de réception.

A cet effet, selon l'invention, une liaison amovible du type précité, est essentiellement caractérisée en ce que le fil en matériau à déformation élastique est de forme sensiblement en "U" comprenant un fond prolongé par lesdites deux branches, en ce que le fond est en appui sur une troisième face du corps, cette troisième face étant généralement transversale aux deux faces munies des rainures et en ce que la troisième face du corps comporte une patte qui lui est parallèle et qui définit un passage traversé par le fond du fil.

La liaison amovible suivant l'invention peut éventuellement comporter en outre une ou plusieurs des caractéristiques suivantes :
- les extrémités libres des branches sont croisées de sorte que pour désolidariser le corps de l'organe, les extrémités libres sont rapprochées l'une de l'autre afin de provoquer l'écartement des branches l'une de l'autre pour désengager lesdites branches des gorges de l'organe de réception ;
- les deux extrémités libres sont de longueur importante par rapport à la dimension des faces du corps pour que l'opérateur puisse commander manuellement à distance l'écartement des branches ;
- les deux faces du corps portant les rainures et les deux faces de l'organe de réception portant les gorges sont respectivement symétriques deux à deux par rapport à un plan passant par l'axe longitudinal ;
- la patte est venue de matière avec la troisième face du corps ;
- le fond du fil est relié à chacune des deux branches par une boucle destinée à améliorer les caractéristiques de déformation élastique du fil, de sorte que les branches sont mutuellement écartées sur toute leur longueur lors de leur désengagement;
- le corps et l'organe de réception sont de section transversale de forme sensiblement carrée et les extrémités libres des branches du fil sont croisées et pliées l'une vers l'autre pour être mutuellement divergentes et être espacées l'une de l'autre d'une valeur suffisante pour être rapprochées et désengager les branches hors des gorges de l'organe de réception ; et
- le corps et l'organe de réception sont venus respectivement de matière avec une valve gaz et une valve eau appartenant à un générateur d'eau chaude fonctionnant au gaz.

Ainsi, lors d'opérations de maintenance ou d'entretien, un opérateur peut facilement désolidariser le corps de la valve gaz du couvercle de la valve eau sans avoir à être outillé d'outils supplémentaires tout en réalisant facilement l'opération en très peu de temps.

Un exemple de réalisation de l'invention va maintenant être décrit en regard des dessins annexés, sur lesquels :
- la figure 1 est une vue en coupe longitudinale d'un générateur d'eau chaude qui est équipé d'une liaison amovible de la valve gaz sur la valve eau selon la présente invention ;
- les figures 2 et 3 sont des vues en perspective avant et arrière du montage du corps de la valve gaz (dont seule la partie inférieure a été représentée) sur le couvercle de la valve eau (également partiellement représentée) ; et
- la figure 4 est une vue en perspective du fil métallique utilisé dans la liaison représentée aux figures 2 et 3.

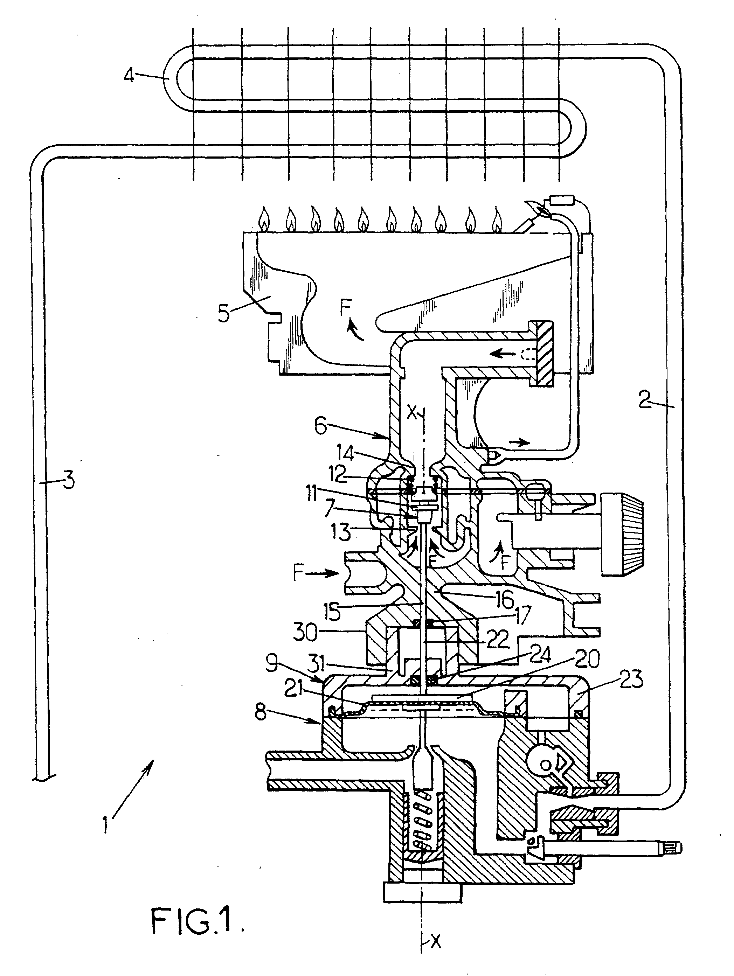

A la figure 1 est représenté, de manière connue en soi, un générateur d'eau chaude 1 fonctionnant au gaz qui comprend un circuit d'entrée d'eau froide 2, une conduite de sortie d'eau chaude 3, un échangeur de chaleur 4 interposé entre le circuit d'entrée d'eau froide 2 et la conduite de sortie d'eau chaude 3 et un brûleur 5 à combustible fluide (notamment du gaz) qui transfère de la chaleur vers un échangeur de chaleur 4.

Le gaz est amené au brûleur 5 au moyen d'une conduite d'admission 6 dans laquelle le débit de gaz est régulé par une valve gaz 7 dont l'ouverture et la fermeture est commandée par un dispositif d'asservissement 8 de l'admission du gaz au brûleur 5 au passage de l'eau froide dans le circuit d'entrée d'eau froide 2 Ce dispositif 8 comprend une valve eau 9.

La valve gaz 7 est constituée d'un clapet 11 sollicité par un ressort de compression 12 pour venir en appui contre un siège de clapet 13. Le ressort de ,compression 12 est en appui sur le clapet 11 d'une part et sur un épaulement 14 de la conduite d'admission 6 d'autre part. Le clapet 11 est par ailleurs relié à une tige de clapet 15 qui traverse le corps 16 de la valve gaz 7.

La valve eau 9 est constituée d'un plateau 20 qui est monté en contact d'une membrane souple 21 elle-même sensible au débit d'eau admis dans le circuit d'entrée d'eau froide 2. Le plateau 20 est solidaire d'une tige 22 qui traverse un couvercle 23 de la valve eau 9 pour être relié à la tige de clapet 15 de la valve gaz 6.

Généralement, le générateur d'eau chaude 1 est monté verticalement de sorte que le corps 16 de la valve gaz 6 est situé au-dessus du couvercle 23 de la valve eau 9 et les tiges 15 et 22 sont sensiblement verticales et définissent un axe longitudinal X-X.

L'étanchéité du montage de la tige 15 du clapet 11 dans le corps 16 de la valve gaz 6 est assurée au moyen d'un joint torique 17 placé dans l'alésage dans lequel se déplace la tige 15 tandis que l'étanchéité du couvercle 23 de la valve eau 9 est assurée au moyen d'un joint torique 24 placé dans l'orifice traversant ledit couvercle et dans lequel se déplace la tige 22 du plateau 20.

Le montage du corps 16 de la valve gaz 6 sur le couvercle 23 de la valve eau 9 se fait par emboîtement de la partie inférieure 30 du corps 16 sur un organe de réception 31 venu de matière avec le dessus du couvercle 23 de la valve eau 9.

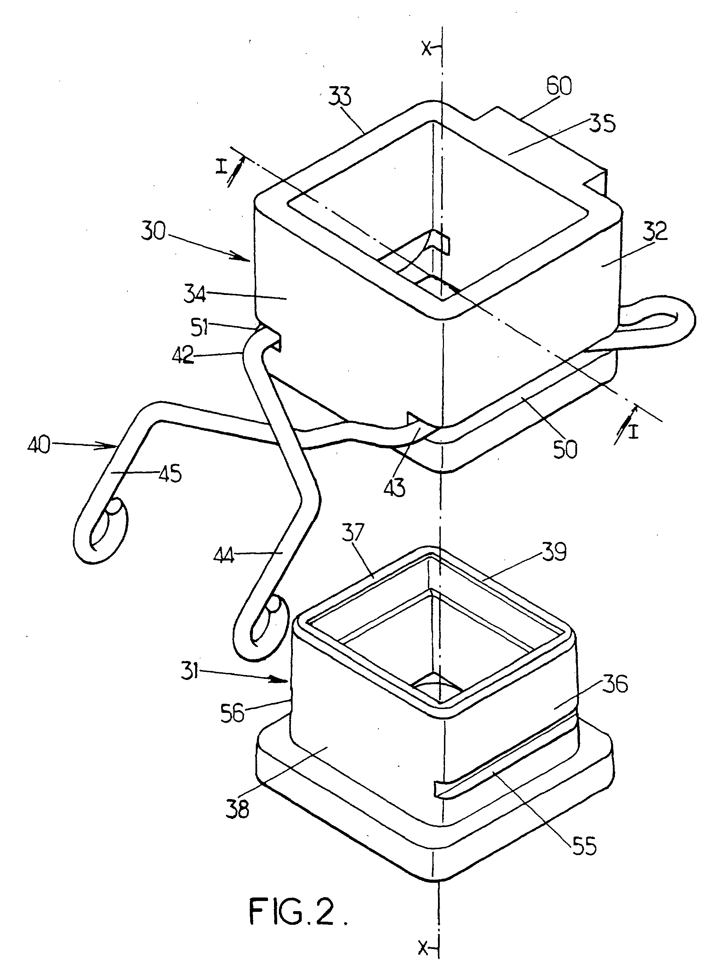

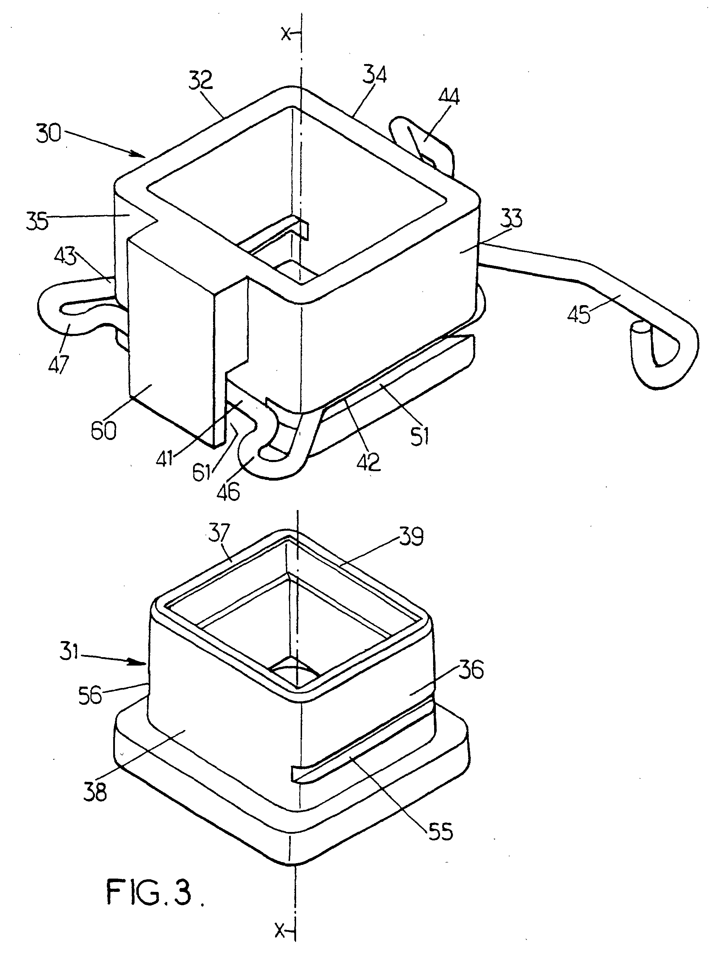

Comme cela est plus particulièrement représenté aux figures 2 et 3, la partie inférieure 30 de la valve gaz 6 et l'organe de réception 31 de la valve eau 9 sont des cylindres à base carrée d'axe longitudinal X-X et qui peuvent être emboîtés l'un sur l'autre.

La partie inférieure 30 possède ainsi deux faces latérales 32, 33 situées sensiblement en vis-à-vis ainsi qu'une face avant 34 et une face arrière 35. De même, l'organe de réception 31 possède deux faces latérales 36, 37 ainsi qu'une face avant 38 et une face arrière 39.

L'emmanchement de la partie inférieure 30 sur l'organe de réception 31 est maintenu en position de manière non permanente au moyen d'un clip ou fil en matériau à déformation élastique 40 de forme générale en "U" dont l'ouverture est commandée par un opérateur.

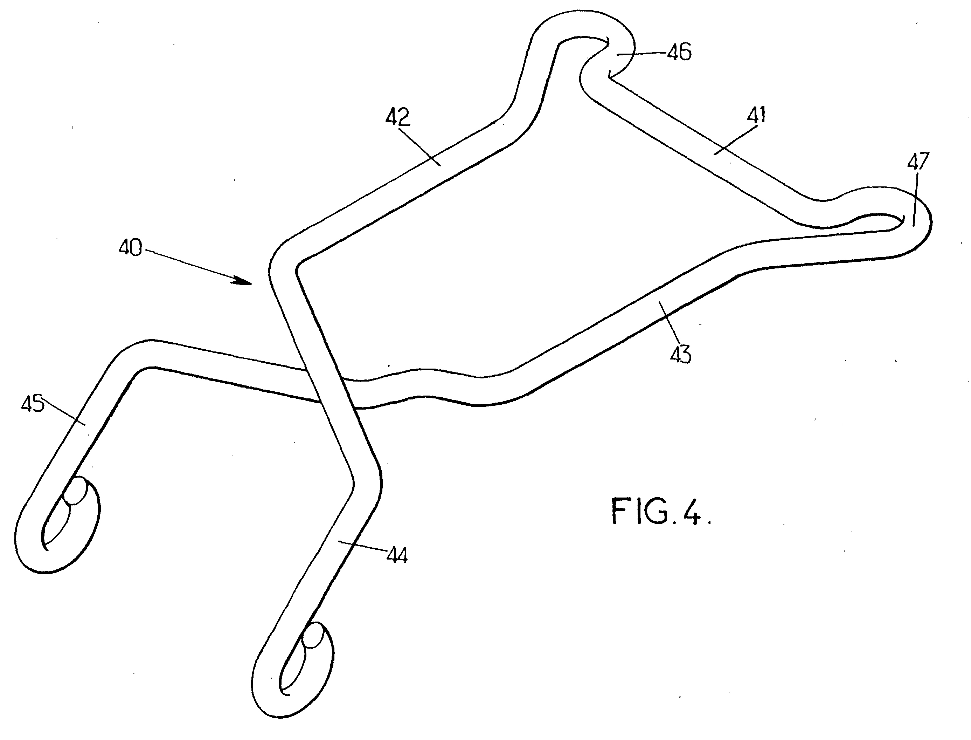

Le fil en matériau à déformation élastique 40 est plus particulièrement représenté à la figure 4 et est constitué d'un fond 41 à partir duquel sont venues de matière deux branches 42 et 43 qui sont sensiblement parallèles et qui possèdent chacune une extrémité libre 44, 45.

Afin de faciliter la déformation élastique du fil 40, le fond 41 est relié aux deux branches 42 et 43 par deux boucles ouvertes 46, 47. La forme des boucles est telle que les extrémités des branches 42, 43 reliées aux boucles 46, 47 sont situées respectivement au niveau des extrémités du fond 41 reliées aux boucles 46,47. Ainsi, lors de leur écartement, les branches 42, 43 effectuent une rotation autour d'un centre de rotation fictif situé sensiblement au centre des boucles, de sorte que les branches 42, 43 se déplacent pratiquement parallèlement à elles-mêmes.

Afin qu'un opérateur puisse commander l'écartement des branches 42 et 43, les extrémités libres 44, 45 de ces branches sont croisées et repliées l'une vers l'autre à mi-longueur de manière à être divergentes.

Le fond 41 et les deux branches 42, 43 sont situés dans un même plan tandis que les parties repliées des extrémités 44, 45 sont inclinées vers le bas. Au repos, la valeur de l'écartement entre les parties repliées des extrémités libres 44, 45 est suffisante pour que les branches 42, 43 puissent être écartées d'une valeur au moins égale à la dimension de la face avant 38 du corps 31.

Le fil 40 est porté, préalablement à l'emmanchement sur l'organe de réception 31, par la partie inférieure 30 sensiblement perpendiculairement à l'axe longitudinal X-X. A cet effet, les faces latérales 32, 33 de la partie 30 sont traversées par deux rainures 50, 51 dans lesquelles sont logées les branches 42, 43 du fil 40. Le fond 41 de ce fil est en butée encre la face arrière 35 et une patte 60 venue de matière avec la partie supérieure de cette face et parallèlement à celle-ci. La patte 60 et la face 35 forme ainsi un passage 61 ouvert vers le bas et traversé par le fond 41.

Pour mettre en position le fil 40 sur la partie inférieure 30, il suffit d'écarter l'une de l'autre les branches 42 et 43 de manière à pouvoir enfiler le fil 40 en forme de "U" sur l'une des faces latérales 32 et 33, jusqu'à ce que le fond 41 vienne en butée entre la face arrière 35 et la patte 60, puis sur l'autre de ces faces. Les branches 42 et 43 sont alors relâchées et prennent place à l'intérieur des rainures 50 et 51. Les extrémités libres 44 et 45 du fil 40 font saillie en avant de la face avant 34 de la partie inférieure 30. La longueur de ces extrémités est sensiblement égale à la largeur des faces 32, 33 de sorte qu'un opérateur peut pincer ces extrémités tout en étant éloigné de la partie inférieure 30. Par ailleurs, les rainures 50, 51 sont ménagées en partie basse des faces latérales 32, 33.

Les faces latérales 36, 37 de l'organe de réception 31 sont munies de deux gorges 55, 56. En partie supérieure, les faces latérales 36, 37, avant 38 et arrière 39 sont biseaurées.

Lors de l'emmanchement de la partie inférieure 30 sur l'organe de réception 31, les branches 42, 43 sont légèrement écartées l'une de l'autre en coopérant avec la forme biseautée des faces latérales de l'organe 31. Ces branches 42, 43 glissent ensuite le long des faces latérales 36, 37 pour ensuite s'encliqueter dans les gorges 55, 56. Le corps 31 est alors immobilisé précisément sur l'organe de réception 31, ce qui permet une immobilisation positive du corps 16 de la valve gaz 6 sur le couvercle 23 de la valve eau 9.

Lorsqu'un opérateur veut procéder au démontage des deux valves, il suffit de pincer les extrémités libres 44, 45 de manière à les rapprocher et à ainsi écarter les branches 42, 43 pour les désengager des gorges 55, 56 appartenant aux faces latérales 36, 37 de l'organe de réception 31. La forme des boucles 46, 47 permet d'écarter les branches 42, 43 sur toute leur longueur. La partie inférieure 30 peut alors être retirée de l'organe de réception 31, ou vice-versa. La longueur des extrémités libres 44,45 permet à l'opérateur de commander manuellement à distance l'écartement des branches 42,43, sans être gêné par la proximité immédiate d'autres parties constitutives du générateur d'eau chaude. Après désolidarisation des deux valves, le fil métallique 40 reste en place sur la partie inférieure 30 du corps 16 de la valve gaz 6.

L'immobilisation des valves l'une sur l'autre selon la présente invention est rendue d'autant plus efficace que l'étanchéité de l'ensemble est obtenue par d'autres parties constitutives de ces valves que celles participant au montage mécanique des valves.

Le corps de la valve gaz est par exemple réalisé en alliage de zinc tandis que le couvercle de la valve eau est réalisé en matériau composite.

Par ailleurs, on comprend aisément que la partie inférieure 30 et l'organe de réception 31 peuvent être, en section transversale, de toute autre forme que celle décrite précédemment, comme par exemple être de forme polygonale ou circulaire. Les branches 42, 43 du fil en matériau à déformation élastique 40 sont alors adoptées à la forme des faces de la partie inférieure 30 sur laquelle elles sont montées.

Des éléments différents des valves eau et gaz peuvent être immobilisés au moyen du fil décrit ci-dessus.

## Revendications

1. Liaison amovible par emmanchement d'un corps (30) sur un organe de réception (31), le corps (30) et l'organe de réception (31) comprenant chacun au moins deux faces (36, 37, 32, 33) situées sensiblement en vis-à-vis et étant d'axes longitudinaux (X-X) sensiblement confondus après emmanchement, la liaison étant telle que :
- les deux faces (32, 33) du corps (30) sont chacune traversées par une rainure transversale (50, 51) à l'axe longitudinal (X-X) ;
- les deux faces (36, 37) de l'organe de réception (31), destinées à être en regard desdites deux faces (32, 33) du corps (30) après emmanchement, sont chacune munies d'une gorge (55, 56) transversale à l'axe longitudinal (X-X) ;
- un fil en matériau à déformation élastique (40) est porté par le corps (30), transversalement à l'axe longitudinal (X-X), le fil (40) possédant au moins deux branches (42, 43), chacune des branches (42, 43) étant logée dans l'une des rainures (50, 51) du corps (30) et est terminée par une extrémité libre (44, 45) ; et
- les branches (42, 43) sont destinées à pénétrer dans les gorges (55, 56) de l'organe de réception (31) après emmanchement pour maintenir en position le corps (30) sur l'organe de réception (31), et les extrémités libres (44, 45) des branches (42, 43) sont destinées à être manoeuvrées par un opérateur pour désengager les branches (42, 43) des gorges (55, 56) et désolidariser le corps (30) de l'organe de réception (31),
**caractérisée en ce que** le fil en matériau à déformation élastique (40) est de forme sensiblement en "U" comprenant un fond (41) prolongé par lesdites deux branches (42, 43), **en ce que** le fond (41) est en appui sur une troisième face (35) du corps (30), cette troisième face (35) étant généralement transversale aux deux faces (32, 33) munies des rainures (50, 51) et **en ce que** la troisième face (35) du corps (30) possède une patte (60) qui lui est parallèle et qui définit un passage (61) traversé par le fond (41) du fil (40).

2. Liaison amovible par emmanchement selon la revendication 1, **caractérisée en ce que** les extrémités libres (44, 45) des branches (42, 43) sont croisées de sorte que pour désolidariser le corps (30) de l'organe (31), les extrémités libres (44, 45) sont rapprochées l'une de l'autre afin de provoquer l'écartement des branches (42, 43) l'une de l'autre pour désengager lesdites branches des gorges (55, 56) de l'organe de réception (31).

3. Liaison amovible par emmanchement selon la revendication 2, **caractérisée en ce que** le longeur des deux extrémités libres (44, 45), par rapport à la dimension des faces (32, 33) du corps (30), est suffisante, pour que l'opérateur puisse commander manuellement à distance l'écartement des branches (42, 43).

4. Liaison amovible par emmanchement selon la revendication 3, **caractérisée en ce que** les deux faces (32, 33) du corps (30) portant les rainures (50, 51) et les deux faces (36, 37) de l'organe de réception (31) portant les gorges (55, 56) sont respectivement symétriques deux à deux par rapport à un plan passant par l'axe longitudinal (X-X).

5. Liaison amovible par emmanchement selon la revendication 4, **caractérisée en ce que** la patte (60) est venue de matière avec la troisième face (35) du corps (30).

6. Liaison amovible par emmanchement selon la revendication 5, **caractérisée en ce que** le fond (41) du fil (40) est relié à chacune des deux branches (42, 43) par une boucle (46, 47) ouverte destinée à améliorer les caractéristiques de déformation élastique du fil (40), de sorte que les branches (42, 43) sont mutuellement écartées sur toute leur longueur lors de leur désengagement.

7. Liaison amovible par emmanchement selon l'une quelconque des revendications 1 à 6, **caractérisée en ce que** le corps (30) et l'organe de réception (31) sont de section transversale de forme sensiblement carrée et **en ce que** les extrémités libres (44, 45) des branches du fil sont croisées et pliées l'une vers l'autre pour être mutuellement divergentes et être espacées l'une de l'autre d'une valeur suffisante pour être rapprochées et désengager les branches hors des gorges de l'organe de réception.

8. Liaison amovible par emmanchement selon l'une quelconque des revendications 1 à 7, **caractérisée en ce que** le corps (30) et l'organe de réception (31) sont venus respectivement de matière avec une valve gaz (6) et une valve eau (8) appartenant à un générateur d'eau chaude (1) fonctionnant au gaz.

## Patentansprüche

1. Lösbare Verbindung durch Aufstecken eines Körpers (30) auf ein Aufnahmeorgan (31), wobei der Körper (30) und das Aufnahmeorgan (31) jeweils mindestens zwei Seiten (36, 37, 32, 33) aufweisen, die im wesentlichen einander gegenüber angeordnet sind, und Längsachsen (X-X) besitzen, die nach dem Aufstecken im wesentlichen zusammenfallen, wobei die Verbindung so beschaffen ist, daß:
- die beiden Seiten (32, 33) des Körpers (30) jeweils von einem Schlitz (50, 51) durchquert werden, der zur Längsachse (X-X) quer verläuft;
- die beiden Seiten (36, 37) des Aufnahmeorgans (31), die dazu bestimmt sind, nach Aufstecken gegenüber den beiden Seiten (32, 33) des Körpers (30) zu gelangen, jeweils mit einer Nut (55, 56) versehen sind, die zur Längsachse (X-X) quer verläuft;
- ein Draht (40) aus einem elastisch verformbaren Material von dem Körper (30) quer zur Längsachse (X-X) getragen ist, wobei der Draht (40) mindestens zwei Schenkel (42, 43) besitzt, deren jeder in einem der Schlitze (50, 51) des Körpers (30) sitzt und ein freies Ende (44, 45) aufweist; und
- die Schenkel (42, 43) dazu bestimmt sind, nach dem Aufstecken in die Nuten (55, 56) des Aufnahmeorgans (31) einzutreten, um den Körper (30) auf dem Aufnahmeorgan (31) in seiner Stellung zu halten, und die freien Enden (44, 45) der Schenkel (42, 43) dazu bestimmt sind, von einer Bedienungsperson betätigt zu werden, um die Schenkel (42, 43) aus den Nuten (55, 56) auszurücken und den Körper (30) von dem Aufnahmeorgan (31) zu lösen,
**dadurch gekennzeichnet, daß** der Draht(40) aus elastisch verformbarem Material im wesentlichen die Form eines "U" hat, das einen Boden (41) besitzt, der durch die beiden Schenkel (42, 43) verlängert wird, daß der Boden (41) an einer dritten Seite (35) des Körpers (30) anliegt, die im allgemeinen quer zu den beiden mit den Schlitzen (50, 51) versehenen Seiten (32, 33) angeordnet ist, und daß die dritte Seite (35) des Körpers (30) einen Lappen (60) aufweist, der zu ihr parallel ist und einen Durchgang (61) abgrenzt, der von dem Boden (41) des Drahts (40) durchquert wird.

2. Lösbare Steckverbindung nach Anspruch 1, **dadurch gekennzeichnet, daß** die freien Enden (44, 45) der Schenkel (42, 43) so gekreuzt sind, daß zum Lösen des Körpers (30) von dem Organ (31) die freien Enden (44, 45) einander genähert werden, um die Entfernung der Schenkel (42, 43) voneinander zu bewirken, um die Schenkel aus den Nuten (55, 56) des Aufnahmeorgans (31) auszurücken.

3. Lösbare Steckverbindung nach Anspruch 2, **dadurch gekennzeichnet, daß** die Länge der freien Enden (44, 45) bezüglich der Abmessung der Seiten (32, 33) des Körpers (30) dafür ausreicht, daß die Bedienungsperson die Entfernung der Schenkel (42, 43) voneinander von ferne manuell steuern kann.

4. Lösbare Steckverbindung nach Anspruch 3, **dadurch gekennzeichnet, daß** die beiden die Schlitze (50, 51) aufweisenden Seiten (32, 33) des Körpers (30) und die beiden die Nuten (55, 56) aufweisenden Seiten (36, 37) des Aufnahmeorgans (31) jeweils paarweise bezüglich einer durch die Längsachse (X-X) gelegten Ebene symmetrisch sind.

5. Lösbare Steckverbindung nach Anspruch 4, **dadurch gekennzeichnet, daß** der Lappen (60) mit der dritten Seite (35) des Körpers (30) einstückig ausgeführt ist.

6. Lösbare Steckverbindung nach Anspruch 5, **dadurch gekennzeichnet, daß** der Boden (41) des Drahts (40) mit jedem der beiden Schenkel (42, 43) durch eine offene Schleife (46, 47) verbunden ist, die dazu bestimmt ist, die Merkmale der elastischen Verformung des Drahts (40) so zu verbessern, daß die Schenkel (42, 43) bei ihrem Ausrücken auf ihrer ganzen Länge voneinander entfernt werden.

7. Lösbare Steckverbindung nach einem der Ansprüche 1 bis 6, **dadurch gekennzeichnet, daß** der Körper (30) und das Aufnahmeorgan (31) einen im wesentlichen quadratischen Querschnitt besitzen und daß die freien Enden (44, 45) der Schenkel des Drahts gekreuzt und aufeinander zu gebogen sind, um zueinander zu divergieren und voneinander um einen ausreichenden Wert entfernt zu sein, um angenähert werden zu können und die Schenkel aus den Nuten des Aufnahmeorgans ausrücken zu können.

8. Lösbare Steckverbindung nach einem der Ansprüche 1 bis 7, **dadurch gekennzeichnet, daß** der Körper (30) und das Aufnahmeorgan (31) mit einem Gasventil (6) bzw. mit einem Wasserventil (8) einstückig ausgeführt sind, die zu einem mit Gas arbeitenden Heißwassererzeuger gehören.

## Claims

1. Push-on detachable coupling for assembling a body (30) onto a receiving device (31), the body (30) and the receiving device (31) each comprising at least two faces (36, 37, 32, 33) situated substantially opposite each other and having longitudinal axes (X-X) that are substantially coincident after assembly, the coupling being such that :
- each of the two faces (32, 33) of the body (30) is traversed by a groove (50, 51) transverse to the longitudinal axis (X-X);
- each of the two faces (36, 37) of the receiving device (31), designed to be facing the said two faces (32, 33) of the body (30) after assembly, is provided with a recess (55, 56) transverse to the longitudinal axis (X-X);
- a wire made of elastically deformable material (40) is carried by the body (30), transversely to the longitudinal axis (X-X), the wire (40) possessing at least two branches (42, 43), each of the branches (42, 43) being housed in one of the grooves (50, 51) of the body (30) and being terminated by a free end (44, 45); and
- the branches (42, 43) are designed to enter the recesses (55, 56) of the receiving device (31) after assembly so as to keep the body (30) in position on the receiving device (31), and the free ends (44, 45) of the branches (42, 43) are designed to be manipulated by an operator so as to disengage the branches (42, 43) from the recesses (55, 56) and to release the body (30) from the receiving device (31),
**characterized in that**:
- the wire made of elastically deformable material (40) is substantially in the form of a "U" comprising a base (41) extended by the said two branches (42, 43), the base (41) resting on a third face (35) of the body (30), this third face (35) being generally transverse to the two faces (32, 33) provided with grooves (50, 51) and the third face (35) of the body (30) possessing a lug (60) that is parallel thereto and defining a passage (61) traversed by the base (41) of the wire (40).

2. Push-on detachable coupling according to claim 1, **characterized in that** the free ends (44, 45) of the branches (42, 43) are crossed so that to release the body (30) from the device (31), the free ends (44, 45) are brought together so as to bring about the separation of the branches (42, 43) from each other in order to disengage the said branches from the recesses (55, 56) of the receiving device (31).

3. Push-on detachable coupling according to claim 2, **characterized in that** the length of the two free ends (44, 45), in relation to the dimensions of the faces (32, 33) of the body (30), is sufficient for the operator to be able to control manually the separation of the branches (42, 43) at a distance.

4. Push-on detachable coupling according to claim 3, **characterized in that** the two faces (32, 33) of the body (30) carrying the grooves (50, 51) and the two faces (36, 37) of the receiving device (31) carrying the recesses (55, 56) are respectively symmetrical in pairs with respect to a plane passing through the longitudinal axis (X-X).

5. Push-on detachable coupling according to claim 4, **characterized in that** the lug (60) is made in one piece with the third face (35) of the body (30).

6. Push-on detachable coupling according to claim 5, **characterized in that** the base (41) of the wire (40) is connected to each of the two branches (42, 43) by an open loop (46, 47) designed to improve the elastic deformation characteristics of the wire (40) so that the branches (42, 43) are mutually separated over all their length as they are disengaged.

7. Push-on detachable coupling according to any one of claims 1 to 6, **characterized in that** the body (30) and the receiving device (31) have a cross section with a substantially square shape and **in that** the free ends (44, 45) of the branches of the wire are crossed and folded towards each other so as to be mutually divergent and so as to be spaced from each other by a sufficient amount to be brought together and to disengage the branches from the recesses of the receiving device.

8. Push-on detachable coupling according to any one of claims 1 to 7, **characterized in that** the body (30) and the receiving device (31) are made in one piece respectively with a gas valve (6) and a water valve (8) belonging to a gas-operated hot water generator (1).
